# EUROPEAN PATENT APPLICATION

(11) **EP 1 408 320 A2**
(43) Date of publication of application: **14.04.2004**
(21) Application number: 03380207.5
(22) Date of filing: 22.09.2003
(51) Int. Cl.: G01N 1/31

(54) **Programmable automatic system for microbiological, histological and cytological stainings**

(30) Priority: 09.10.2002 ES 200202316
(71) Applicant: Francisco Soria Melguizo, S.A., 28011 Madrid (ES)
(72) Inventor: Francisco Soria Melguizo, S.A., 28011 Madrid (ES)
(74) Representative: Elosegui de la Pena, Inigo

(57) **Abstract**

In a unit (1), which is open at the front by means of a practical, transparent cover (2), a plurality of compartments (5) is established for the respective containers carrying the different types of reagent, being adapted to the different types of staining, with a washing container (5') and a drying container (5'') also present for the microscope slides. These microscope slides are housed inside a small bucket (8), capable of staying submerged in any one of the containers, connected to a mobile headstock (13) and movable in accordance with the three axes of a system of Cartesian coordinates, duly controlled by the programming electronics, which is accessed via a keyboard (32) and with which communication is established through an alphanumeric display (31).

## Description

### OBJECT OF THE INVENTION

The present invention refers to a multipurpose and programmable automatic system, which has been especially developed for the staining of both human and animal bacteria and tissue, set out over a microscope slide, with individual, sealed containers which contain a selection of the reagents necessary for the different stainings forming a part of the system.

The object of this invention is to provide analysis laboratories with a system with which to subject different clinical samples to a successive selection of colourings and washes so that the final colouring of the product enables the classification of the bacteria and tissue used in the test for subsequent clinical diagnosis.

### BACKGROUND OF THE INVENTION

Some medical analysis fields use the staining of clinical samples as the first step in the diagnosis of diseases or cellular malformations. This involves exploiting the properties of certain microorganisms or cellular tissues in order to retain a particular colouring despite successive decolouring and washes. The mechanism of the reactions is not entirely known, although it is related to different factors such as the possession of isoelectric points, the presence of magnesium protein complexes, phosphoric stress etc.

Up until now, apparatus for automated staining have only been used in the histology and cytology fields, not embracing therefore multipurpose laboratory systems capable of performing any type of staining, as they do not perform microbiological stainings, and not including the reagents adjusted to each type of staining, which give rise to different colouring tones, as a result of which it is often necessary to recalibrate or readjust the times of the staining in each colouring every time a supplier is changed. Amongst these apparatus are those described under publication numbers WO 92/19952, WO 97/03827 and ES 2 094 911.

Such apparatus are complicated and costly machines which, apart from only processing tissue preparations and not bacteria or other micro-organisms, include a multitude of devices such as auxiliary computers, units for the heating of the sample, stirring rods for the reagents, resin dispensers to protect the preparations, atomisers for the reagents on the glass microscope slides etc.

### DESCRIPTION OF THE INVENTION

The programmable, automatic system that this invention proposes satisfactorily resolves the problem previously outlined and offers a structurally simple and functionally efficient solution combining the instrumentation with the different colourings that each staining comprises, simplifying the steps required and standardising the end result.

More specifically, the system includes both a programmable instrument for each type of staining and detachable and interchangeable containers that incorporate the reagents for each type of staining to be performed.

Therefore, just one system enables the realisation of multiple stainings, cytological, histological and microbiological, through the selection of different programmes and the installation of the corresponding containers, with the appropriate reagents.

To this end, the system includes a programmable instrument and corresponding programming electronics.

The programmable instrument is a prismatic-rectangular shaped unit equipped below with a plurality of compartments for the respective containers, two of which are set up permanently as washing and drying containers while the rest of the compartments are designed for detachable containers, holding the appropriate reagents for each type of staining to be carried out.

The middle part of the unit, open at the front and provided with both a transparent and folding protective cover in this area, is designed to house a mobile headstock with its corresponding motorised elements supplying the headstock's movements in accordance with the axes of the system of Cartesian coordinates. The aforementioned headstock holds a small bucket with a grooved base for the placement within these grooves of microscope slides with their corresponding cytological, histological or microbiological samples.

In the upper part of the unit there is a closed compartment which houses the programming electronics, consisting in a control module, which via a user interface is connected to an alphanumeric display, signalling devices, a keyboard and a key for the storage of staining sequences, which by means of two drivers is linked to the motors operating the mobile headstock, the fan, the electrovalve of the drying and washing containers, and by means of a reading module and conditioning of sensors is connected to the movement sensors in the direction of axes X, Y and Z as well as to the small bucket sensor.

### DESCRIPTION OF THE DRAWINGS

To complement the description and in order to provide a better understanding of the characteristics of the invention, in line with a special example of its practical embodiment, a set of drawings with illustrative rather than limiting characteristics is enclosed as an integral part of this description:

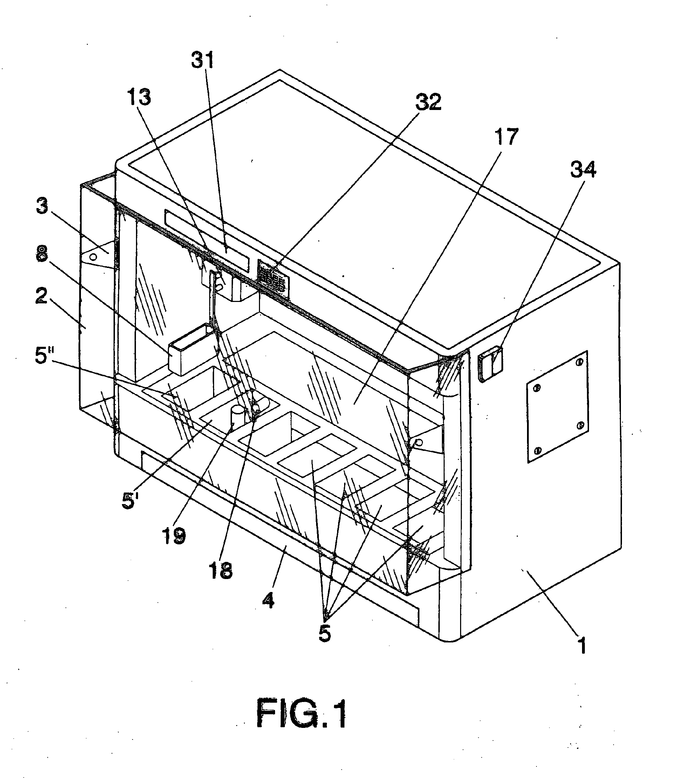

- Figure 1: Shows a perspective view of the programmable instrument as well as the electronic control elements, which need to be visible and able to be operated by the user.

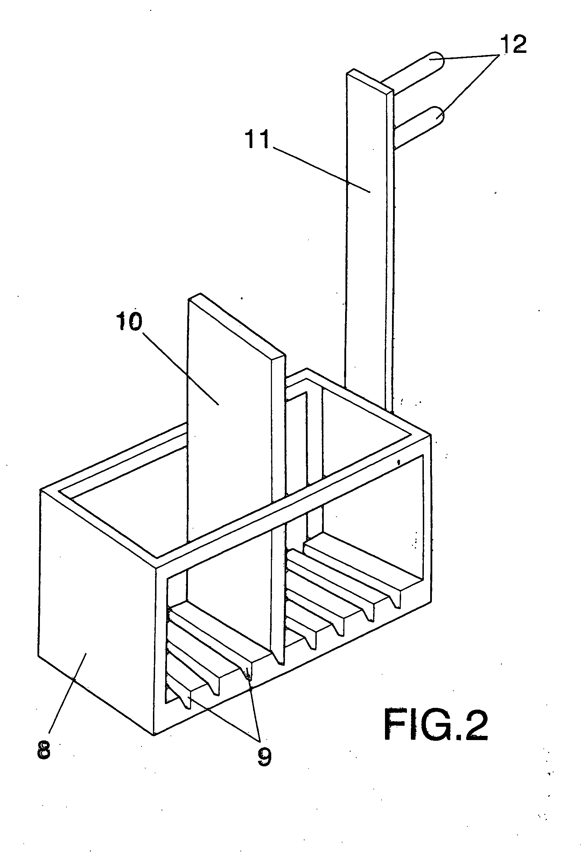

- Figure 2: Shows an enlargement and perspective view of the removable small bucket with a microscope slide inserted within it by way of example.

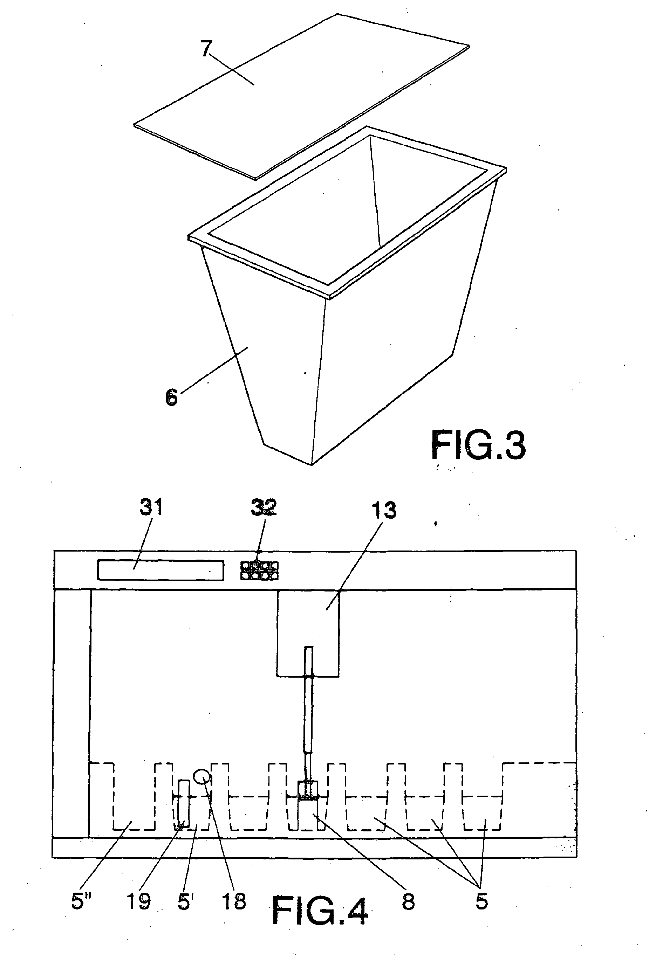

- Figure 3: Shows a perspective view of a detachable container with its lid
- Figure 4: Shows a schematic illustration, frontal view of the instrument, with the small bucket housed in one of the detachable containers.
- Figure 5: Shows a schematic representation, elevational view of the instrument, with the motorised elements of the headstock visible.
- Figure 6: Shows a diagram of different squares representing the control and programming electronics.

### PREFERRED EMBODIMENT OF THE INVENTION

Looking at the figures described one can see how the invention proposes a programmable instrument in the form of a prismatic-rectangular shaped unit (1) open at the front, with a protective, transparent cover (2) preventing external objects from interfering in the staining process or the user getting splashed, a container that can be raised upwards on two pivots fixed at either end of the unit and that connects the aforementioned cover to supports (3) protruding from the same.

In the bottom part of the unit (1) there is a tray (4) to collect splashes, that can be removed frontally, and above it a plurality of rectangular compartments (5), lined up alongside one another, designed to house the detachable containers (6) and to be marketed perfectly closed with their corresponding lid (7), containing in their interior the specific reagents for each type of staining, as well as at the same time serving as the aforementioned compartments (5) designed to receive the container (6) for a certain type of staining, so that the operating programme of the system can allow in each specific case the workings over the corresponding container (6), as will be seen later.

The array of compartments (5) is complemented by two external compartments (5' ) and (5"), the first of which is designed to permanently house a washing container and the second a drying container, both of these operating over a small bucket (8), by means of which one or more microscope slides (10) are introduced into one of the detachable containers (6) holding the reagents, once the staining has finished.

The small bucket (8) has a plurality of grooves (9) on its base, positioned in parallel and of sufficient size and distance from one another to accommodate in their interior the respective microscope slides (10) which, as is conventional, are rectangular glass sheets, enabling the simultaneous staining of various microscope slides with these being sufficiently close but at the same time far enough apart from one another to assure the unrestricted access of the reagent to them.

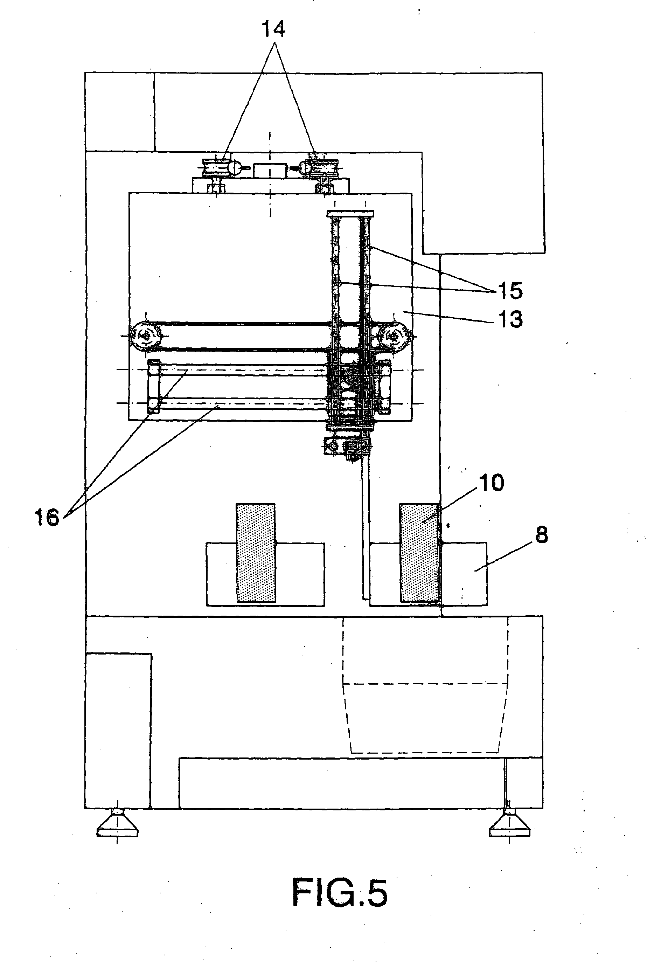

The small bucket (8) has a lateral arm extending upwards (11), culminating in a pair of rods (12) anchored to a mobile headstock (13) movable crossways on horizontal lines (14), vertically on guides (15) and backwards on guides (16), as shown in figure 5 and by means of three independent motors, not shown, all of which mean that the small bucket (8) can be moved freely, within a system of Cartesian coordinates in the interior of the unit (1), leaving the area where the containers are totally clear and when necessary move these containers, at which point the small bucket (8) is positioned over a platform (17) behind the containers, upon which platform a piece of absorbent paper for drops or splashes may also be positioned. More specifically, this motorised system means the small bucket (8) can be positioned in front of any container (6) through an initial crosswise movement, it can be moved forwards so it is situated in the vertical part of the container (6) chosen, it can descend vertically so that the microscope slide (10) stays submerged in the reagent of the container and at the end of the staining carry out a reverse circuit and, after the removal of the microscope slide (10) from the small bucket (8), the movement of the latter towards the washing container (5') and then the drying one (5" ), the small bucket (8) is now ready to carry out a new staining operating cycle with the same or different reagent.

Logically the washing container (5'), fixed as previously mentioned, comprises an inlet of water (18) and a drainage outlet (19), the first of which is assisted by an electrovalve, while the drainage is produced by gravity via a drain that controls the level of water in the interior of the container. The drying container (5'') comprises a tub with a side grille through which a rapid airflow enters drying the microscope slides. This airflow is provided by a fan not shown in the drawings, assisted by a heating element that works when you want to accelerate the drying process with warm air. The inlet of air into the interior is equipped with a filter in order to prevent air particles from interfering with the preparations in the microscope slides. The outlet of warm air takes place in the upper part of the drying tub and, afterwards and eventually, through the general vapour outlet located on the side part of the unit.

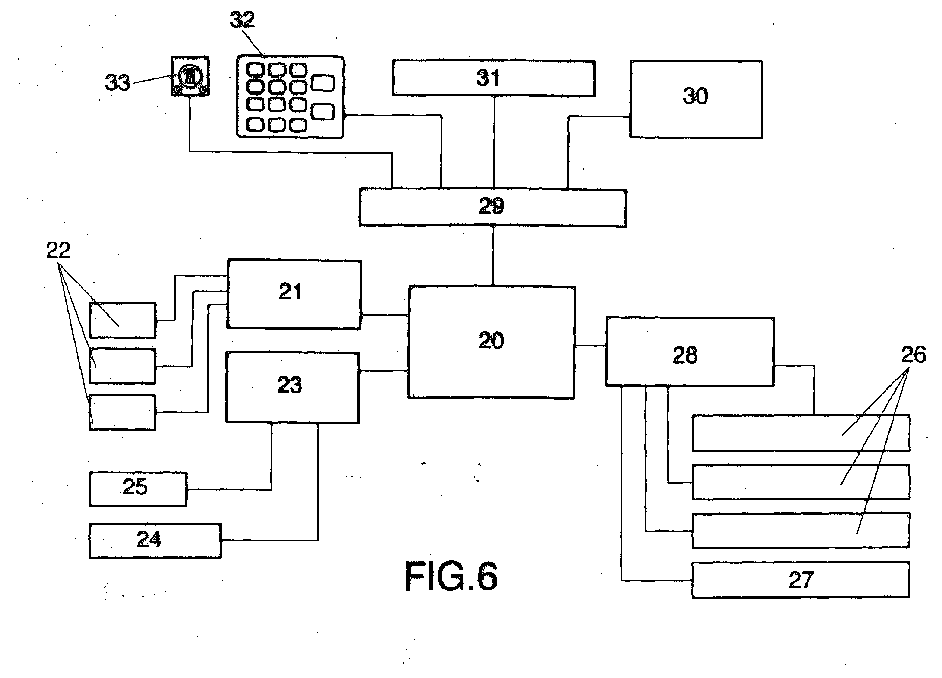

All the functions of the system are duly programmed by the control electronics shown in figure 6, in which there is a control module (20) controlling, through PWM drivers (21), the three motors (22) of the headstock (13) in line with the three axes of the system of Cartesian coordinates, and by means of drivers (23) the washing electrovalve (24) and the drying fan (25).

The control module (20) receives information from three movement sensors (26) in accordance with the three axes of the aforementioned system of Cartesian coordinates and from a small bucket sensor (27), specifically receiving this information via a reading module (28) and the conditioning of sensors.

Finally, via a user interface (29) the control module (20) is connected to the signalling devices (30), an alphanumeric display (31), a keyboard (32) and a key (33) providing access to the storage of staining sequences, all of this controlled naturally by a general switch (34).

## Claims

1. Programmable, automatic system for microbiological, histological and cytological stainings, which has as its objective the realisation of different types of stainings by means of relevant reagents, as well as different ones, on clinical samples established in respective microscope slides, **characterized in that** it is formed by the combination of a programmable instrument and programming electronics incorporating such programmable instrument a plurality of compartments (5) designed to house the respective containers (6) with the different types of reagent, complemented by a fixed washing container (5') and drying container (5") with these containers being designed to receive in a programmed fashion a small bucket (8) carrying one or more microscope slides (10), movable in accordance with the axes of the system of Cartesian coordinates, duly controlled by the programming electronics.

2. Programmable, automatic system for microbiological, histological and cytological stainings, as claimed in claim 1, **characterised in that** the programmable instrument takes the form of a unit (1), open at the front and assisted in its entrance by a practical, transparent cover (3), being established at the base or bottom part of this unit (1) the compartments (4) for the containers (6) as well as the fixed washing (5') and drying (5") containers, being established behind the containers a platform (7) and in front of and below these a removable tray (4) for the collection of splashes, while positioned on the upper level of the interior of the unit (1) are the instruments for moving the small bucket (8), while in the extreme upper area of the unit are located the programming and control electronics.

3. Programmable, automatic system for microbiological, histological and cytological stainings, as claimed in the preceding claims, **characterised in that** the small bucket (8) incorporates in its base a plurality of grooves in parallel (9), of the right size and shape to receive in their centre the respective microscope slides (10), positioned vertically and stably.

4. Programmable, automatic system for microbiological, histological and cytological stainings, as claimed in claims 1 and 2, **characterised in that** the small bucket (8) incorporates an arm (11) by means of which a mobile headstock (13) is fixed movable on cross-sectional guides (14), vertical ones (15) and anterior- posterior ones (16), operated by respective motors (22), which mean that the small bucket (8) is able to adopt any position in the interior of the unit (1), including that of being immersed in any one of the containers (6), (5'), (5'').

5. Programmable, automatic system for microbiological, histological and cytological stainings, as claimed in claims 1 and 2, **characterised in that** the washing container (5') has a water inlet (18), assisted by an electrovalve and an overflow outlet (19), while the drying container (5") has a side grille through which the same current of air generated by a fan in the interior of the unit (1) flows.

6. Programmable, automatic system for microbiological, histological and cytological stainings, as claimed in claims 1 and 2, **characterised in that** each container (6) constitutes a detachable element carrying a certain type of reagent and is perfectly closed with a lid (7).

7. Programmable, automatic system for microbiological, histological and cytological stainings, as claimed in the preceding claims, **characterised in that** its programming electronics consists of a control module (20) which by means of drivers (21) controls the motors (22) that move the headstock (13) and consequently the small bucket (8), which via drivers (23) propel the washing electrovalve (24) and the fan (25) of the washing (5') and drying (5") containers, which by means of a reading module (28) and conditioning of sensors receive information from the movement sensors (26) in accordance with the three axes and the small bucket sensor (27), the control module (20) being connected also via an interface (29), to the signalling devices (30), an alphanumeric display (31), a keyboard (32) and a key for the storage of the staining (33) sequences .
